Europäisches Patentamt

European Patent Office

Office européen des brevets

(11) Veröffentlichungsnummer: **0 217 134**
**A2**

## (12) EUROPÄISCHE PATENTANMELDUNG

(21) Anmeldenummer: 86111839.6

(22) Anmeldetag: 27.08.86

(51) Int. Cl.⁴: **F16J 15/54**

(30) Priorität: 04.10.85 DE 3535445

(43) Veröffentlichungstag der Anmeldung:
08.04.87 Patentblatt 87/15

(84) Benannte Vertragsstaaten:
AT DE FR GB IT SE

(71) Anmelder: GOETZE AG
Bürgermeister-Schmidt-Strasse 17
D-5093 Burscheid 1(DE)

(72) Erfinder: Deuring, Hans, Dipl.-Ing.
Im Eulenflug 29
D-5093 Burscheid(DE)

(54) Wellenabdichtungssystem.

(57) Bei einem Wellenabdichtungssytem zur Abdichtung von insbesondere Luftölgemischen in Kurbelwellengehäusen von Verbrennungskraftmaschinen ist dem umlaufenden Lippendichtungsring, dessen Dichtlippe sich bevorzugt unter der Zentrifugalkraft im Betrieb abhebt, ein Labyrinthdichtungsring aus im Betrieb rotierenden und stillstehenden Bauteilen vorgeschaltet, in deren Spalt sich unter mehrfacher radialer und axialer Umlenkung das Luftölgemisch unter der Zentrifugalkraft trennt, ist im Dichtlippenteil der Dichtlippe eine labyrinthseitig wirkende Ölrückförderungseinrichtung vorgeschaltet, und ist zwischen Dichtlippenteil und Labyrinthteil ein radial nach außen zum Kurbelwellenraum führender Kanal vorgesehen. Die Dichtlippe ist so optimal vor Schmierölen aus dem Kurbelwellenraum geschützt, und insbesondere können sich die bei Hochleistungsdieselmotoren im Schmieröl vorhandenen festen Verbrennungsrückstände nicht im Dichtlippenbereich abtragen und dort Zerstörungen hervorrufen.

## Wellenabdichtungssystem.

Die Erfindung betrifft ein Wellenabdichtungssystem zur Abdichtung von Gasflüssigkeitsgemischen. wie insbesondere von Schmierölspritzer enthaltenden Luftölgemischen in Kurbelwellengehäusen von Verbrennungskraftmaschinen, bestehend aus einem umlaufenden elastomeren Lippendichtungsring, dessen Dichtlippe bevorzugt unter der Zentrifugalkraft während des Umlaufes abhebt, und einem auf der Gasflüssigkeitsseite vorgeschalteten Labyrinthdichtungsring.

Elastomere Lippendichtungsringe werden in der Praxis im allgemeinen erfolgreich als Wellendichtungsringe zur Abdichtung gegenüber unter gegebenenfalls unterschiedlichen Drucken stehenden Flüssigkeiten oder Gasen eingesetzt. Werden jedoch Gas-Flüssigkeitsgemische, wie Luftölgemische, zum Beispiel in Dieselmotoren, abgedichtet, so können sich die in Öl mitgerissenen Staub-und Schmutzpartikel an der Dichtlippe ablagern und an der Dichtlippe Schäden mit nachfolgenden Leckagen hervorrufen. Insbesondere an den Durchführungsstellen des Kurbelwellendes durch das Kurbelwellengehäuse eines Hochleistungsdieselmotors, bei denen das Schmieröl höhere Anteile an festen Verbrennungsrückstandteilchen enthält oder das Schmieröl durch Verbrennungsvorgänge eine höhere Viskosität erhalten hat, können solche von den Schmierölspritzern mitgerissene Bestandteile an der Dichtlippe sehr schnell Beschädigungen mit nachfolgenden Leckagen hervorrufen. Im Schnitt fallen zur Zeit Kurbelwellenabdichtungen in Dieselmotoren häufig schon nach einer relativ kurzen Laufzeit aus.

Nach der US-PS 3 459 431 ist beispielsweise bei einem ölgefüllten Lager als Abdichtung ein elastomerer Lippendichtungsring mit einem axialen elastomeren Vorsprung auf der Luftseite bekannt, der von einem mit der Welle rotierenden und im Querschnitt etwa U-förmig über den Vorsprung berührungsfrei gebogenen Metallring besonders geschützt sit. Im Betrieb lagern sich im Spalt zwischen Ring und Vorsprung unter der Zentrifugalkraft Staub, Schmutz und Feuchtigkeit ab und die eigentliche Dichtlippe bleibt vor Zerstörungen geschützt. Für Kurbelwellenabdichtungen sind solche Schutzmaßnahmen jedoch nicht geeignet, denn die im Kurbelwellengehäuse schwallartig auftretenden Ölspritzer würden durch den Spalt bis zur Dichtlippe gelange, es würden vorher im Spalt abgelagerte Staub-und Schmutzteilchen mitgerissen werden und dann an der Dichtlippe Schäden hervorrufen.

Nach der EP-PA 0117267 sind Wellenabdichtungssysteme für ölnebelgeschmierte Getriebe bekannt, die aus einem rotierenden elastomeren Lippendichtungsring und einem ölnebelseitig vorgeschalteten Ölfilterring bestehen. Die Dichtlippe wirkt als Stillstandsperre nur im Stillstand oder bei geringen Umlaufgeschwindigkeiten, während sie sich bei höheren Umlaufgeschwindigkeiten unter der Zentrifugalkraft von der Dichtstelle abhebt. Im Ölfilterring selbst werden bei höheren Geschwindigkeiten aus dem Ölne bei Öltröpfchen unter der Zentrifugalkraft abgeschieden und die Öltröpfchen gelange über radiale Kanäle im Gehäuse zum Getriebe zurück. Die Dichtlippe selbst bleibt frei von Ölablagerungen mit nachfolgenden Zerstörungen.

Zur Abdichtung der Kurbelwellenenden im Kurbelwellengehäuse sind solche Systeme jedoch nicht geeignet. Insbesondere bei stärkeren Verunreinigungen, wie vor allem beim Verbrennungsvorgang eines Dieselmotors anfallende Ölkohle, die in das Kurbelwellengehäuse gelangt, würden die - schwallartig im Kurbelwellengehäuse auftretenden Schmierölspritzer den Ölfilter mit den Schmutzbestandteilen nach kurzer Zeit zusetzen beziehungsweise feine Schmutzpartikel würden überhaupt nicht aus dem Schmieröl abgetrennt, der Ölfilter würde· unwirksam und über die vorhandenen Kanäle würde schmutzpartikelenthaltendes Schmieröl schließlich zur Dichtlippe gelangen, die durch Ablagerungen hervorgerufene Schäden undicht wird.

Der vorliegenden Erfindung liegt daher die Aufgabe zugrunde, ein Wellenabdichtungssytem gegenüber Gasflüssigkeitsgemischen, wie insbesondere gegenüber Luftschmierölgemischen in Kurbelwellengehäusen von Hochleistungsdieselmotoren zu schaffen, die eine verbesserte Dichtwirkung bei erhöhter Betriebssicherheit gegenüber Leckagen bei wesentlich erhöhter Lebensdauer besitzen. Die Dichtung soll darüberhinaus auch wirtschaftlich in Seriendieselmotoren einsetzbar sein.

Diese Aufgabe wird durch ein Wellenabdichtungssytem mit umlaufendem elastomeren Lippendichtungsring und auf der Gasflüssigkeitsseite axial vorgeschalteten Labyrithdichtungsring gelöst, bei dem derLabyrinthdichtungsring aus im Betrieb rotierenden und stillstehenden Teilen besteht, zwischen denen ein Spalt gebildet ist, durch den das Gasflüssigkeitsgemisch unter mehrfacher radialer und axialer Umlenkung geleitet wird, bei dem im Lippendichtungsteil der Dichtlippe eine zur Gasflüssigkeitsseite wirkende Flüssigkeitsrückförderungseinrichtung vorgeschaltet ist und bei dem zwischen Lippendichtungsteil und Labyrinthdichtungsteil mindestens ein radial nach außen führender Flüssigkeitsrückführungskanal zum Gasflüssigkeitsraum vorgesehen ist. Von der Gasflüssigkeitsseite in das Labyrinth eindringende Gasflüssigkeitsgemische werden jetzt im Labyrinth unter mehrfacher Umlenkung in Rotation versetzt, dabei erfolgt die Abtrennung der flüssigen, gegebenenfalls feste Partikel enthaltenden Bestandteile unter der Zentrifugalkraft, die Tröpfchen werden an den axialen Vorsprüngen gesammelt zum Ausgang des Labyrinths beziehungsweise zum Ende des Labyrinths und von dort über den radialen Rückförderungskanal zum Flüssigkeitsraum zurücktransportiert. Damit die abgetrennte Flüssigkeit am Ende des Labyrinthspaltes besser zum radial nach außen führenden Kanal gefördert wird, wird das Ende des Labyrinthspaltes bevorzugt durch einen radial nach außen führenden Vorsprung gebildet, dessen Ende zum besseren Abtropfen oder Abschleudern der Flüssigkeit abgeschrägt ist.

Durch die relativ große Breite des Labyrinthspaltes und vor allem durch seine Begrenzung durch rotierende und stillstehende Wandungen ist ein Zusetzen des Spaltes auch bei schmutzteilehaltigem Schmieröl beziehungsweise hochviskosem Schmieröl nicht möglich und die Labyrinthdichtung bleibt auch als Abdichtung des Kurbelwellenendes im Kurbelwellengehäuse eines Hochleistungsdieselmotors über längere Betriebszeiten voll wirksam.

Der eigentlichen Dichtlippe, die durch die Fliehkraft nach Überschreiten der Leerlaufdrehzahl von der "stehenden" Welle abhebt, ist eine Flüssigkeitsrückförderungseinrichtung vorgeschaltet. Diese besteht aus einem zur Gasflüssigkeitsseite fördernden, im Betrieb rotierenden und mit einem Laufring zusammenwirkenden Gewinde. Bevorzugt besteht dabei das Gewinde aus elastomerem Werkstoff, der zusammen mit der Dichtlippe an einem Gehäusering anvulkanisiert ist. Die Gewinderippen wirken dabei bevorzugt radial nach außen mit dem Laufring zusammen und bleiben so bei hohen Drehzahlen voll wirksam. Durch die Rückförderungseinrichtung können im Labyrinth übertretende Flüssigkeitsschwalle, wie sie im Kurbelwellengehäuse auftreten, die vom Labyrinth nicht vollständig aufgefangen werden, zurückgefördert werden, und die Dichtlippe bleibt vor eintretenden Flüssigkeiten mit möglicher Schadensbildung geschützt. Zur Rückförderung kann der Laufring, wie am Ende des Labyrinths, einen am Ende abgeschrägten, radial nach außen zum Rückförderungskanal weisenden Vorsprung besitzen, von dem gesammelte Flüssigkeiten zum Kanal abtropfen.

Zur Ergänzung ist bevorzugt zur Vermeidung eine Pumpwirkung der Dichtmanschette bei radialen Bewegungen der zwischen Dichtmanschette und Laufring liegende Raum auf der Flüssigkeitsrückförderungseinrichtungsseite konstruktiv möglichst klein gestaltet. Bevorzugt ist dazu der Raum mit einem polymeren Material so ausgeschäumt, daß nur ein schmaler Spalt zwischen Füllung und Laufring oder Dichtlippe bestehen bleibt.

Durch die Erfindung ist somit ein Wellenabdichtungssytem zur Abdichtung gegenüber Gasflüssigkeitsgemischen geschaffen, welche mit langer Betriebsdauer verlustfrei abdichtet. Insbesondere Schmierölluftgemische in Kurbelwellengehäusen von Hochleistungsdieselmotoren, in denen das Schmieröl höhere Anteile fester Verbrennungsrückstände und/oder eine höhere Viskosität besitzt, können so über lange Betriebszeiten wirkungsvoll abgedichtet werden. Der relativ breite von rotierenden und stillstehenden Teilen im Labyrinth gebildete Kanal kann sich nicht zusetzen und die Dichtlippe ist vor schwallartig auftretenden - schmutzhaltigen Ölspritzern mit zusätzlichen Maßnahmen geschützt. Die konstruktive Gestaltung gewährleistet zugleich eine verlustfreie Rückförderung und Wiederverwendbarkeit des Schmieröls.

Die erfindungsgemäße Dichtung besitzt zugleich einen geringen axialen und radialen Bauraum und ist vor der Montage auf der Welle mit eingestellten Spalten zentriert zusammensetzbar, so daß ihr Einsatz auch in Serienmotoren als Dichtungspatrone wirtschaftlich ist.

Während die erfindungsgemäße Dichtung bevorzugt zur Abdichtung von Kurbelwellenenden in Kurbelwellengehäusen von Hochleistungsdieselmotoren verwendet werden soll, ist ihr Einsatz auch an anderen Dichtstellen mit ähnlichen Problemen, wie zur Abdichtung ölnebengeschmierter Getriebewellen oder Lagern, möglich.

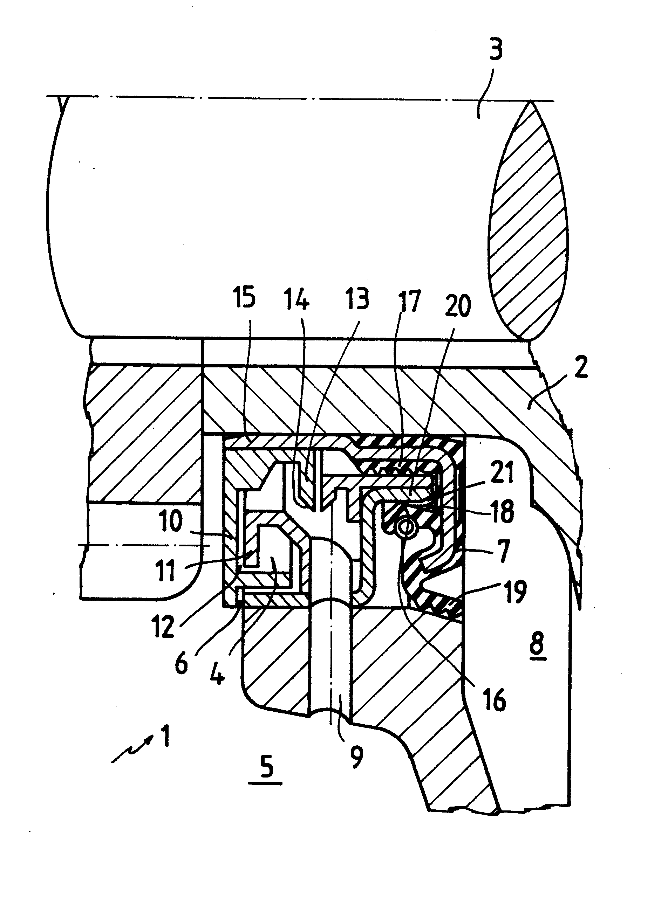

Die Abbildung zeigt ein Ausführungsbeispiel eines erfindungsgemäßen Wellenabdichtungssystems im Querschnitt.

In der Abbildung ist 1 das Wellenabdichtungssystem, welches über den Zwischenring 2 fest mit der rotierenden Kurbelwelle 3 eines Dieselmotors verbunden ist. Das Labyrinthteil 4 besitzt die Öffnung 6 zum ölsprühnebelgefüllten Kurbelwellengehäuseraum 5, und das Dichtlippenteil 7 ist auf der Luftseite 8 angeordnet. Zwischen Labyrinthteil 4 und Dichtlippenteil 7 ist der radial nach außen zum Ölsprühnebelraum 5 führenden Kanal 9 angeordnet.

Im Labyrinth 4 ist durch das im Betrieb rotierende Teil 10 und stillstehende Teil 11 ein Labyrinthspalt 12 gebildet, in dem die Ölsprühnebel unter mehrfacher radialer und axialer Umlenkung unter der Zentrifugalkraft getrennt und an den axialen Vorsprüngen abgeschieden und gesammelt werden. Die Öltröpfchen gelangen entweder über die Öffnung 6 oder über den radialen rotierenden Vorsprung 13 mit abgeschrägtem Ende 14 und dem radialen Kanal 9 zurück in das Kurbelwellengehäuse 5.

Der Lippendichtungsteil 7 besteht aus dem mit der Kurbel welle 3 verbundenen Gehäusering 15, an den die federbelastete radial nach innen wirkende Dichtlippe 16, die spiralige rdial nach außen wirkende Rückförderungseinrichtung 17 und eine luftseitige Schutzlippe 19 anvulkanisiert sind. Dichtlippe 16 und Rückförderungseinrichtung 17 wirken mit dem im Betrieb stillstehenden Laufring 20 zusammen. Im Extremfall bis zum Dichtlippenteil 7 übergetretenes Schmieröl wird von der Rückförderungseinrichtung 17 in Richtung des Labyrinthteiles 4 zurückgefördert und tropft von dort über den abgeschrägten radialen Vorsprung 23 des Laufringes 20 zur Rückförderung im Kanal 9 ab. Der zweite radiale Vorsprung 24 des Laufringes 20 dient der Zentrierung und Spalteinstellung beim Zusammensetzen des Dichtungsringes 1 zu einer montagefähigen Dichtpatrone.

Fertigungstechnisch besteht der Gehäusering 15, der Laufringteil 20 im Dichtlippenteil 7 sowie der stillstehende Teil 11 im Labyrinth 4 aus Metall, während der Laufring 20 selbst und das rotierende Teil 10 im Labyrinth 4 aus einem Kunststoff, wie Polyamid oder PVC, bestehen.

Zusätzlich ist der Raum 18 zwischen Dichtmanschette 16 und Laufring 20 mit polymerem Material unter Belassung des schmalen Spaltes 21 ausgefüllt, so daß Pumpwirkungen durch radiale Verschiebungen der Dichtmanschette 16 weitgehend ausgeschlossen sind.

## Ansprüche

1. Wellenabdichtungssystem zur Abdichtung von Gasflüssigkeitsgemischen, wie insbesondere von Luftölgemischen in Kurbelwellengehäusen von Verbrennungskraftmaschinen, bestehend aus einem umlaufenden elastomeren Lippendichtungsring, dessen Dichtlippe bevorzugt unter der Zentrifugalkraft während des Umlaufes abhebt, und einem auf der Gasflüssigkeitsseite vorgeschalteten Labyrinthdichtungsring, dadurch gekennzeichnet, daß der Labyrinthdichtungsring (4) aus im Betrieb rotierenden (1) und stillstehenden (11) Teilen besteht, zwischen denen ein Spalt (12) gebildet ist, durch das das Gasflüssigkeitsgemisch unter mehrfacher radialer und axialer Umlenkung geleitet wird, daß im Dichtlippenteil (7) der Dichtlippe (16) eine zur Gasflüssigkeitsseite wirkende Flüssigkeitsrückförderungseinrichtung (17) vorgeschaltet ist und daß zwischen Lippendichtungsteil (7) und Labyrinthteil (4) mindestens ein radial nach außen zum Flüssigkeitsraum (5) führender Flüssigkeitsrückführungskanal (9) vorgesehen ist.

2. Wellenabdichtungssytem nach Anspruch 1, dadurch gekennzeichnet, daß das Ende des Labyrinthspaltes (12) durch einen radial nach außen zum Kanal (9) weisenden Vorsprung (13) gebildet ist.

3. Wellenabdichtungssystem nach Anspruch 2, dadurch ge kennzeichnet, daß das Ende (14) des Vorsprungs (13) abgeschrägt ist.

4. Wellenabdichtungssystem nach mindestens einem der Ansprüche 1 bis 3, dadurch gekennzeichnet, daß die Flüssigkeitsrückförderungseinrichtung (17) aus einem im Betrieb rotierenden in Richtung zum Labyrinth (4) wirkenden Gewinde besteht, das mit einem stillstehenden Laufring (20) zusammenwirkt.

5. Wellenabdichtungssystem nach mindestens einem der vorangegangenen Ansprüche 1 bis 4, dadurch gekennzeichnet, daß die Flüssigkeitsrückförderungseinrichtung (17) aus einem Elastomer besteht, das zusammen mit der elastomeren Dichtlippe (16) am Gehäusering (15) anvulkanisiert und/oder angeklebt ist.

6. Wellenabdichtungssystem nach mindestens einem der Ansprüche 1 bis 5, dadurch gekennzeichnet, daß der Laufring (20) auf der Labyrinthseite (4) einen radial nach außen zum Flüssigkeitsrückförderungskanal (9) weisenden Vorsprung (23) besitzt, dessen Ende abgeschrägt ist.

7. Wellenabdichtungssystem nach mindestens einem der Ansprüche 1 bis 6, dadurch gekennzeichnet, daß der zwischen Dichtmanschette (16) und dem Laufring (20) auf der Gasflüssigkeitsseite liegende Raum (18) unter Freilassung eines schmalen Spaltes (21) mit polymerem Material ausgefüllt ist.